# FASCICULE DE BREVET EUROPEEN

(11) **EP 0 499 509 B1**
(45) Date de publication et mention de la délivrance du brevet: **06.05.1999**
(21) Numéro de dépôt: 92400291.8
(22) Date de dépôt: 05.02.1992
(51) Int. Cl.: B01D 61/14

(54) **Procédé et modules perfectionnés de filtration en milieu liquide sous flux tangentiel instationnaire**
Verfahren und verbesserte Vorrichtung zum Filtrieren mit tangentiellem, instationärem Flüssigkeitsstrom
Improved process and apparatus for filtration in a tangential and unsteady liquid flow

(30) Priorité: 13.02.1991 FR 9101655
(43) Date de publication de la demande: 19.08.1992
(73) Titulaire: TECH-SEP, F-92408 Courbevoie Cédex (FR)
(72) Inventeur: Grangeon, André, F-84600 Valreas (FR); Lenoir, Jeannine, F-69630 Chaponost (FR); Pelissier, Robert, F-13000 Marseille (FR)
(74) Mandataire: Seugnet, Jean Louis

(56) Documents cités:
- WO-A-91/00135
- FR-A- 2 563 443

## Description

La présente invention concerne un procédé et un module de filtration d'un milieu liquide sous flux tangentiel instationnaire permettant d'effectuer des opérations de séparation en milieu liquide, notamment de filtration, de microfiltration, d'ultrafiltration ou d'osmose inverse.

Il est connu qu'il est possible d'effectuer de telles opérations de filtration sous flux tangentiel en vue de séparer les constituants d'un milieu liquide en tenant compte en particulier de leur taille, de leur forme et de leurs caractéristiques physiques, sous l'effet d'une pression en tant que force agissante.

Selon cette technique, on fait circuler tangentiellement le milieu liquide à traiter sur l'une des faces d'une membrane poreuse organique ou inorganique plane ou tubulaire ayant la porosité adaptée.

Sous l'effet d'une différence de pression entre les deux faces de la membrane, au moins un des constituants du fluide à traiter passe sélectivement à travers la membrane. Cette fraction liquide ainsi récupérée est appelée perméat. Le reste du liquide est appelé rétentat.

Ces membranes organiques ou inorganiques sont constituées généralement d'une part, d'un support poreux dont le rôle principal est de conférer les propriétés mécaniques à l'ensemble de la membrane et, d'autre part, d'une couche séparatrice perméable très mince, assurant la séparation et comportant des pores dont les diamètres sont adaptés aux liquides à traiter.

Dans les dispositifs de filtration industrielle, le fluide à traiter passe dans au moins un module de filtration qui est constitué le plus souvent par une pluralité de membranes planes ou tubulaires disposées côte à côte et assemblées à l'intérieur d'une enceinte.

Ce module comporte au moins une entrée du fluide à traiter, une sortie du rétentat et une sortie du perméat.

Des modules de filtration plans sont par exemple décrits par US-A 4 415 447 et US-A 3 861 763.

Des modules de filtration multitubulaires sont par exemple décrits par FR-A-2 228 518, US-A-4 341 631 et EP-A-025 349.

Ces modules d'ultrafiltration multitubulaires peuvent également se présenter sous la forme d'un bloc monolithique perforé comme par exemple décrit par FR-A-2 585 965 et US-A-4 069 157.

Les modules sont situés dans une boucle de circulation continue du milieu liquide à traiter, appelée boucle de circulation, comportant un moyen permettant de faire circuler le fluide (généralement une pompe). La boucle est reliée aux orifices d'entrée et de sortie du module. La boucle comporte en outre une entrée de liquide frais à traiter et une sortie de liquide concentré.

Le rapport du débit d'entrée sur le débit de sortie définit le facteur de concentration.

Un inconvénient majeur de la filtration tangentielle en milieu liquide utilisant une telle boucle de circulation est l'apparition, au bout d'un certain temps de fonctionnement, d'au moins un phénomène limitant l'efficacité de la filtration, explicité ci-aprèset responsable du "colmatage" de la membrane.

Selon la présente invention, on entend donc par colmatage de la couche séparatrice de la membrane l'apparition d'au moins un de ces phénomènes limitants l'efficacité de la filtration. Ce colmatage constitue le problème fondamental à résoudre de la filtration tangentielle bien que ce type de filtration ait apporté des améliorations importantes. Le premier phénomène limitant qui se manifeste au cours du temps est l'apparition de la couche d'adsorption à la surface de la couche séparatrice de la membrane y compris à l'intérieur des pores.

L'importance de cette couche est liée à la nature chimique de la membrane, à celle du fluide à traiter et de ses solutés et également à la surface spécifique de la membrane. L'adsorption sera d'autant plus importante que les pores seront plus étroits et apparaîtra surtout en ultrafiltration.

Le deuxième phénomène limitant est l'obturation proprement dite des pores par blocage de particules à l'intérieur des pores ce qui entraîne une réduction du nombre de pores et/ou une diminution de leur rayon moyen.

Cette obturation des pores peut être éliminée par un lavage chimique. Un tel lavage est efficace mais il impose évidemment l'arrêt de l'installation ainsi qu'une manipulation longue et coûteuse.

Dans certains cas seulement, il est également possible de déboucher les pores par simple inversion du sens de la perméation. Cependant une telle inversion, malgré le gain de perméabilité, entraîne une perte de temps et de perméat, ce qui limite considérablement son efficacité.

Il existe un autre phénomène limitant l'efficacité de la filtration et consistant en l'apparition d'un dépôt de particules à la surface de la couche séparatrice de la membrane.

Bien entendu l'apparition d'un dépôt de particules est directement lié au liquide à filtrer et n'apparaît que dans le cas où le liquide à filtrer contient des particules suffisamment importantes et nombreuses pour former ce dépôt généralement visible à l'oeil nu. En outre, dans le cas des solutions, il existe un autre phénomène limitant consistant en l'adsorption sur la membrane de tous les solutés précipités rendus insolubles du fait de l'augmentation de leur concentration à la surface de la membrane, aux variations de pH et à la dénaturation mécanique des solutés par les pompes.

Un dernier phénomène limitant est la couche de polarisation dont l'apparition est liée à la filtration des solutions. Cette couche de polarisation est constituée par une surconcentration du soluté à la surface de la couche séparatrice. Elle est détruite par diffusion simple lorsque les effets convectifs tendent à disparaître. Son épaisseur, très faible, est de l'ordre de quelques micromètres.

Comme indiqué ci-dessus, le moyen connu pour éliminer au moins temporairement le colmatage est le lavage chimique. Pour diminuer le colmatage, les moyens connus sont l'inversion du sens de la perméation comme indiqué ci-dessus et l'augmentation de la vitesse tangentielle du fluide à traiter.

Un autre moyen connu pour réduire le colmatage est d'opérer un écoulement pulsé du fluide à l'intérieur du module. Ainsi V. Millisic et al [Anti-fouling Technique in Cross-flow microfiltration IVth World Filtration Congress Ostend, Belgium (avril 1986)] pulsent un débit tangentiel de liquide par ouverture et fermeture d'une électrovanne placée sur la boucle de circulation en amont du module. Les pulsations ainsi engendrées permettraient de diminuer sensiblement le colmatage.

Cependant la boucle de circulation est soumise à des coups de bélier importants entraînant ainsi une très grande montée en pression dans les membranes, ce qui favorise en fait le "colmatage".

Il est en outre connu d'engendrer des pulsations au moyen de pompes volumétriques adaptées, ou par l'intermédiaire d'un piston monté dans la boucle engendrant des pulsations par aspiration et refoulement d'un volume précis de liquide. Dans le cas de l'utilisation d'un piston, les pulsations se rajoutent au débit moyen de la boucle. Par contre dans le cas de la pompe volumétrique seul le débit fluctue autour d'une valeur moyenne nulle.

Selon FR-A-2,563,443 l'écrasement du tube souple entre 2 plaques métalliques provoquent un débit pulsé.

Ce débit est pulsé et passe donc par une valeur nulle.

Par ailleurs, à la sortie du filtre, on a une pression constante et positive obtenue à l'aide d'un réservoir à niveau constant.

WO-A-91 00 135 décrit une membrane de filtration traversée par un flux oscillant engendré par un oscillateur et un robinet à 2 voies reliés à un réservoir et à une membrane. Le cycle d'oscillation comporte 3 phases d'égale durée. Il est clair qu'à la phase décrite a la page 3, lignes 13 à 15 correspondant à la mise sous pression du réservoir, la pression et le débit dans la membrane sont alors nuls.

Tous ces dispositifs connus pour engendrer des pulsations sont inadaptés aux systèmes industriels qui mettent en oeuvre des débits de circulation de l'ordre de quelques centaines de m³/h.

Par ailleurs ces dispositifs engendrent des variations brutales de pression qui peuvent détériorer les membranes et le soiuté et favoriser le redépôt des particules précédemment arrachées aux pores de membranes.

La présente invention a pour put de proposer un procédé et un module améliorés de filtration sous flux tangentiel ne provoquant pas de colmatage ou sous une forme atténuée et comportant un module de filtration présentant au moins une membrane, une boucle de circulation continue du fluide a traiter, un moyen pour faire circuler le fluide à intérieur de la boucle et un moyen permettant de prévenir ou de fortement limiter le colmatage des membranes par génération d'un régime instationnaire et périodique au moins dans la membrane.

Le but de la présente invention est de proposer un procédé et un module du type ci-dessus qui ne provoque pas de variations de pression autres que celles engendrées par la circulation du fluide à traiter.

Le but de la présente invention est de proposer un procédé et un module du type ci-dessus maintenant a intérieur du module et de la boucle un débit minimun de balayage entre chaque pulsation.

Un autre but est de proposer un module de filtration sous flux tangentiel comportant un moyen générant un régime instationnaire et périodique au moins dans la membrane du type pseudophysiologique, adapté aux systèmes industriels de filtration par membranes et impliquant des débits de circulation dans la boucle allant jusqu'à quelques centaines de m³/h et plus.

Ces buts et d'autres sont atteints par la présente invention qui concerne un procédé continu de filtration tel que défini dans la revendication 1 et un module de filtration tel que défini dans la revendication 3. Les revendications dépendantes définissent des modes de réalisation préférés de l'invention.

Les débits pseudophysiologiques sont des débits analogues à ceux existant à la sortie du coeur humain.

On a en effet pu mettre en évidence selon la présente invention que l'utilisation de débits pseudophysiologiques dans les membranes alimentées en continu par une boucle de circulation de filtration sous flux tangentiel, permet d'éliminer pratiquement le colmatage ou de le diminuer fortement. Le procédé et le dispositif selon l'invention sont utilisables pour toutes les opérations de filtration incluant plus particulièrement la microfiltration, l'ultrafiltration et l'osmose inverse. La présente invention donne plus particulièrement de bons résultats pour la microfiltration et l'ultrafiltration utilisant des modules de membranes tubulaires.

La présente invention sera mieux comprise à l'examen du dessin annexé sur lequel :
- **la figure 1** représente schématiquement un profil d'un débit pseudophysiologiques.
- **la figure 2** représente un schéma de boucle de circulation pour la filtration à flux tangentiel.
- **la figure 3** est une vue en perspective avec éclatement partiel d'un module d'ultrafiltration tubulaire muni d'un disque tourant.
- **la figure 4** est une coupe suivant l'axe IV - **IV de la figure 3**.
- **la figure 5** est une vue de face suivant l'axe **V - V de la figure 4**.
- **la figure 6** est une vue de face du disque tournant utilisé dans les exemples.
- **les figures 7a et 7b** représentent respectivement durant une période les débits à l'intérieur d'une membrane, et les pressions à l'entrée, Pe, et à la sortie, Ps, d'une membrane, obtenues à l'exemple 1.
   Le profil d'un débit pseudophysiologique est représenté sur la figure 1 ci-après.

En ordonnée figure le débit D et le temps t en abscisse L'espace compris entre t₀ et t₄ représente une période T.

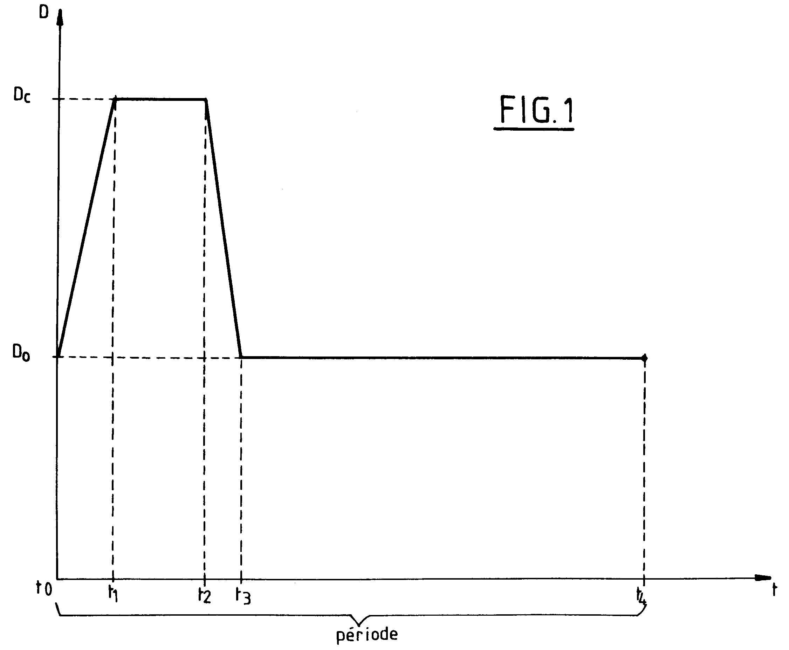

Comme on le voit sur la **figure 1**, à partir d'un débit minimum de balayage Do, le débit présente une forte augmentation entre t₀ et t₁, suivie d'une durée de maintien entre t₁ et t₂ où l'on atteint le débit de crête Dc et d'une diminution jusqu'à retrouver en t₃ le débit minimum de balayage Do.

La pression d'alimentation de la boucle est de préférence inférieure au seuil de saturation des membranes.

Le moyen visé par l'invention permet donc d'augmenter fortement le débit dans la membrane sans variation de pression à l'intérieur de la membrane autre que celle associée aux variations de débit.

Par ailleurs, au début de la période du mouvement du fluide dans la membrane, le moyen engendre une impulsion constituée d'une phase de forte augmentation du débit puis un plateau et une diminution ; la durée de cette impulsion est une fraction de la période qui est comprise entre 0,05 et 0,4. En effet l'utilisation de fractions faibles permet de diminuer la taille des pompes.

L'utilisation de débits pseudophysiologiques dans la filtration à flux tangentiel permet d'éliminer ou à tout le moins de réduire fortement le colmatage. De plus le flux de perméat peut-être sensiblement constant alors qu'en régime stationnaire selon le procédé connu, le flux de perméat diminue et la qualité de la filtration varie avec le temps.

Le moyen permettant d'engendrer des débits pseudophysiologiques peut-être notamment choisi parmi une pompe volumétrique adaptée, une pompe cardiaque et un système à disque tournant situé juste en amont ou juste en aval du module de filtration.

Une pompe volumétrique utilisable est en particulier décrite dans Innov. Tech. Biol. Med. Vol 4, n° 1, 1983, page 33-45 ; Médical & Biological Engineering & Computing, Novembre 1985 page 511-516 ; J. Physiol, Paris, 1977, 73, page 977-1004 et Med. Progr. Technol., n° 6, (1978) page 39-40, cités comme références.

Les pompes cardiaques sont décrites dans de nombreuses publications et brevets.

Bien que la pompe volumétrique décrite dans la référence citée ci-dessus et les pompes cardiaques donnent de très bons résultats, ces deux moyens particuliers pour engendrer des débits pseudophysiologiques sont insuffisants pour traiter des débits de circulation dans la boucle allant jusqu'à quelques centaines de m³/h et, de plus, ne permettent pas de localiser le régime instationnaire aux seules membranes.

Pour résoudre ce problème, la présente invention propose un module de filtration tel que défini dans la revendication 3.

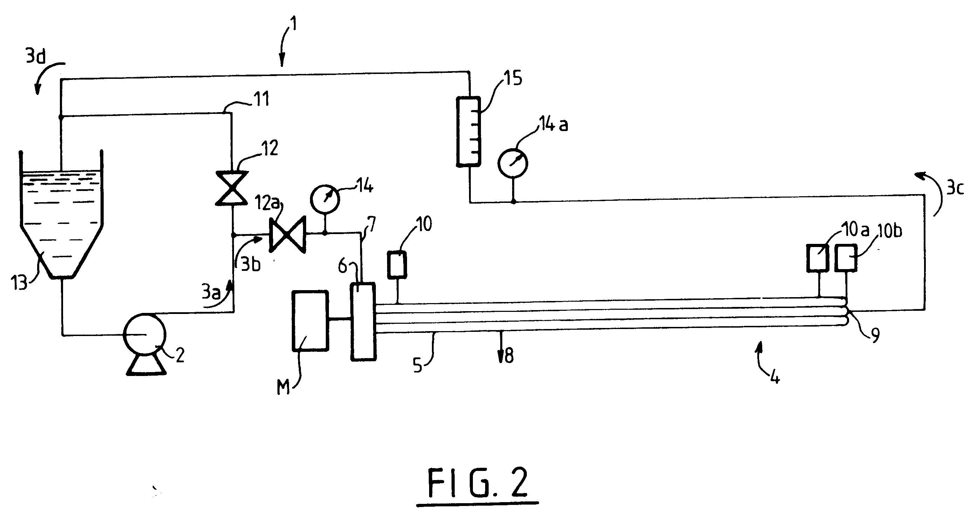

Sur la **figure 2** on a représenté schématiquement une boucle 1 de circulation de fluide à traiter dont la circulation du fluide est induite par une pompe 2 dans le sens des flèches 3a, 3b, 3c et 3d.

La boucle de circulation est équipée d'un module d'ultrafiltration 4 comportant un faisceau de membranes tubulaires non représentées sur cette figure et disposées côte à côte à l'intérieur d'une enceinte étanche 5.

En amont du module 4, est fixé un disque tournant non représenté, logé dans un carter étanche 6 solidaire de l'enceinte 5, le disque étant actionné par le moteur M.

Le module comporte une entrée 7 du fluide à traiter débouchant à l'intérieur du carter 6, une sortie de perméat 8 et une sortie de rétentat 9.

Afin de mesurer le débit et les pressions amont et aval à l'intérieur d'une membrane, on dispose sur une des 5 membranes du module de filtration 4, deux capteurs de pression 10 et 10a et un débimètre 10b.

La boucle de filtration 1 comporte un circuit d'évitement (by-pass) 11 du fluide à traiter, isolé par les vannes 12 et 12a, un bac de rétention 13 du fluide à traiter, deux manomètres 14 et 14a et un débitmètre 15.

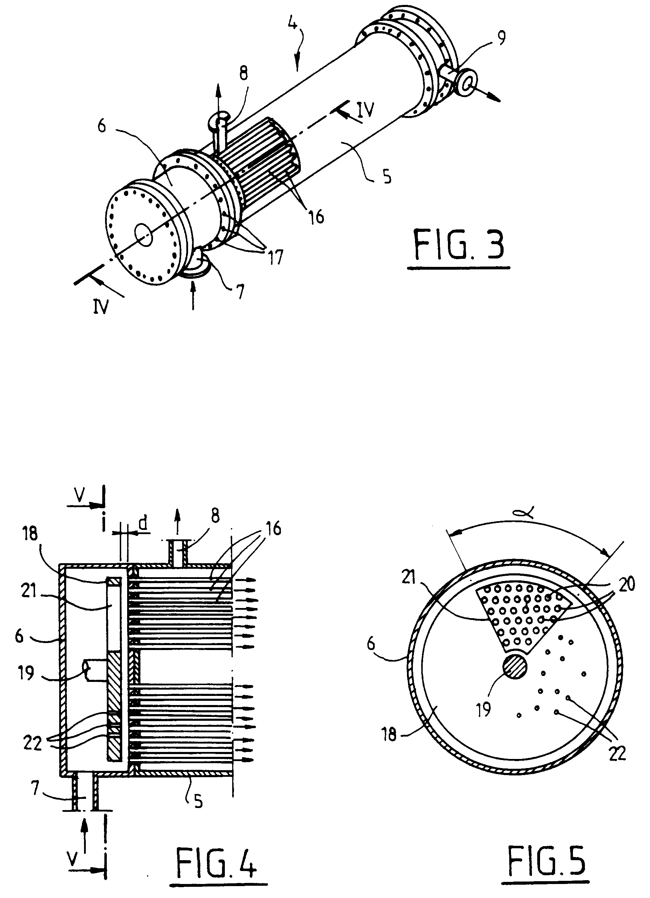

Sur la **figure 3** on voit que le module de filtration 4 est formé d'une enceinte étanche 5 dans laquelle sont logées un faisceau de membranes tubulaires 16 d'ultrafiltration disposées côte à côte.

Le module 4 comporte une sortie de perméat 8 et une sortie de rétentat 9. En amont du module 4 est fixé par des boulons 17 un carter 6 muni d'une entrée 7 du fluide à traiter. A l'intérieur du carter 6 se trouve un disque 18 tournant autour d'un axe 19 parallèle à l'axe des membranes 16 et actionné par un moteur M non représenté **(fig. 4)**.

Le disque tournant 18 est perpendiculaire aux membranes et fait face aux orifices d'entrées 20 des membranes. Une partie 21 du disque est ajourée de manière à ce que, lors d'une rotation complète du disque, la totalité des orifices d'entrées 20 des membranes soit visible à travers la partie ajourée 21 du disque. La partie non ajourée du disque est munie de perforations 22 réparties de préférence de manière homogène dans la partie non ajourée du disque. En outre, le diamètre des perforations est inférieur au diamètre de l'orifice d'entrée des membranes, de préférence dans un rapport d'au moins 1/4. Le nombre des perforations de la partie non ajourée du disque est au plus égal au nombre des orifices des membranes, cachés par cette partie non ajourée.

De préférence la partie ajourée du disque est constituée par au moins un secteur du disque caractérisé par son angle α. Selon une variante de réalisation, le disque tournant 18 peut-être entraîné par le flux du liquide à traiter au moyen d'une turbine située en amont du disque.

Selon un mode de réalisation préféré, la distance (d) entre le disque 18 et les orifices d'entrée 20 des membranes, est réglable et les modules de filtration sont des modules d'ultrafiltration comme par exemple ceux décrits dans les brevets FR-A-2 228 528, US-A-4 341 631 et EP-A-025 349 précités.

Quand la boucle 1 est en fonctionnement, le flux de liquide à traiter passe à travers la partie ajourée 21 et les perforations 22 du disque tournant 18, le disque 18 tourne à une vitesse déterminée par le moteur M (ou par la turbine). Cette vitesse du disque tournant définit la durée de la période T du débit instationnaire à l'intérieur des membranes. L'évolution du débit est similaire à celle représentée sur la figure 1.

Le flux maximum de liquide (débit de crête DC) ne circule que dans un certain nombre de membranes pendant un temps donné. La valeur de l'angle α du secteur ajouré du disque tournant est donc en relation directe avec la durée du débit de crête Dc.

Par ailleurs, le nombre de perforations 22 du disque tournant, le diamètre de ces perforations et la distance séparant le disque tournant des orifices d'entrée 20 des membranes, définissent le débit minimum de balayage Do. Il est clair que plus d est grand, plus le nombre de perforations et leur diamètre sont importants et plus Do est grand, jusqu'à devenir égal au débit engendré par la pompe 2. Il n'y a alors plus de débit pseudophysiologique.

Grâce à la partie ajourée du disque tournant, le flux maximum de liquide ne traverse qu'un certain nombre de membranes pendant un temps donné. Bien entendu le profil de débit représenté à la figure 1 dépend de la géométrie des perforations 22, de l'angle α qui soustend le secteur de la partie ajourée, de la vitesse de rotation du disque tournant 18 et de la distance d entre le disque et les perforations 22.

Ce qui suit concerne des exemples de fonctionnement de la boucle de circulation représentée schématiquement à la figure 2.

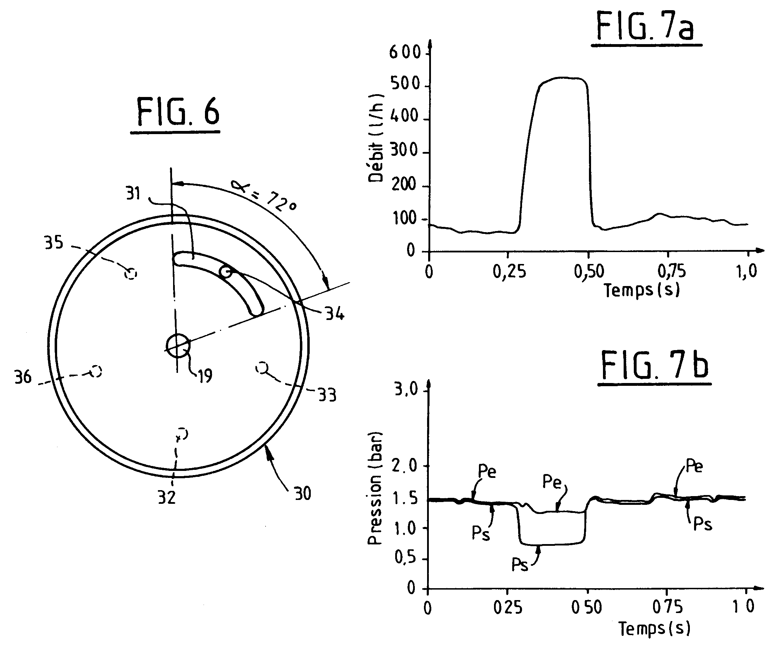

Le module de filtration comporte 5 membranes et les essais ont été réalisés avec le disque tournant représenté sur la figure 6.

Sur la figure 6, on voit que le disque tournant 30 comporte une lumière 31 dont la largeur est sensiblement égale au diamètre des orifices 32, 33, 34, 35 et 36 des 5 membranes. L'angle a du secteur est de 72°. Comme représenté sur la figure 6 ont voit donc que quand le disque tourne, la lumière 31 est toujours en face d'un orifice d'une membrane et d'un seul.

Les membranes ont un diamètre interne de 6 mm, un diamètre externe de 10 mm et une longueur de 1 200 mm. On utilise l'un ou l'autre type de membrane tel que décrit ci-après :
- le premier type de membrane est une membrane dite d'ultrafiltration dont le pouvoir de coupure est de 50 000 daltons.
- le deuxième type de membrane est une membrane de microfiltration dont le diamètre des pores est de 0,14 µm.

Le disque 30 est entraîné par le moteur M à la vitesse de 60 tours/mn.

Le débit Q dans la boucle de circulation est assuré par une pompe volumétrique 2 régulée qui permet d'obtenir des débits variants entre 500 et 2 500 l/h.

### Exemple 1 :

Dans cet exemple les 5 membranes du module de filtration sont du type ultrafiltration tel que défini ci-dessus. Le bac de rétention 13 est au départ rempli d'eau. La vanne 12 est fermée et la vanne 12a est ouverte. Le moteur M est mis en marche. La pompe 2 est réglée pour un débit Q de 1 000 l/h. Cette pompe 2 est mise en marche. Le débit Q est vérifié sur le débimètre 15.

On règle ensuite, à l'aide de la vanne 12, la pression lue sur le manomètre 14 à 1,5 bar. La perte de charge de l'ensemble disque, membranes et tuyauterie est déterminée par la différence des valeurs des pressions indiquées sur les manomètres 14 et 14a.

Le débitmètre 10b mesurant le débit à l'intérieur d'une membrane montre que l'on obtient bien des débits pseudophysiologiques comme indiqué sur la figure 7a.

Sur cette figure on observe que, pour une période T de 1 s, l'impulsion de débit, dont la durée totale est d'environ 0,2 s, comporte une phase de forte augmentation, dans laquelle le débit augmente très rapidement d'environ 100 l/h (débit de base) à environ 500 l/h (débit de crête) suivie d'une phase de maintien du débit de crête légèrement inférieure à 0,2 s, suivie d'une phase de diminution jusqu'à retrouver le débit de base d'envirion 100 l/h.

A l'aide des capteurs de pression 10 et 10a, on détermine les variations de pression à l'entrée, Pe, et à la sortie, Ps, d'une membrane pendant une période T. Ces variations de pressions sont représentées sur la figure 7b.

Sur cette figure 7b, on a représenté la pression Pe à l'entrée d'une membrane qui est sensiblement constante durant toute la période et la pression de sortie Ps qui décroît dès le début de l'impulsion de débit jusqu'à retrouver sa valeur initiale à la fin de cette impulsion. La perte de charge est de 0,7 bars. Ceci illustre clairement que les variations de pression à l'intérieur de la membrane ne sont que la conséquence des variations de débit. On note également que les pressions Pe et Ps à l'entrée et à la sortie d'une membrane sont sensiblement identiques durant une période sauf durant l'impulsion de débit.

Le débit d'eau à la sortie 8 du perméat est de 7,30 l/h. Ce débit représente la valeur maximale de perméat aqueux qui peut être obtenu par la membrane.

Cet exemple à partir d'eau démontre l'efficacité du module de filtration muni du disque tournant.

### Exemple 2 :

On procède de la même façon qu'à l'exemple 1 sauf qu'on remplace l'eau par une suspension de bentonite à 10 g/l et que la sortie 8 du perméat se déverse dans le bac de rétention 13 afin d'éviter toute variation de concentration en bentonite durant les 3 h de durée de l'essai. On mesure également le débit moyen de perméat Dp qui est de 1,48 l/h. Les variations de débit à l'intérieur de la membrane et des pressions entrée/sortie Pe/Ps sont sensiblement identiques à celles obtenues à l'exemple 1. Le débit de base est de 104 l/h et le débit de crête est de 550 l/h.

### Exemple comparatif 2a :

On procède exactement comme à l'exemple 2 sauf que le module de filtration est munie de membranes neuves et ne comporte pas de disque tournant. Chaque membrane est balayée par un débit stationnaire de 200 l/h pour une perte de charge de 0,15 bars. Après 3 h d'essai, le débit moyen de perméat est de 0,74 l/h, soit 2 fois moins qu'à l'exemple 2.

Le débit pseudophysiologique permet donc de réduire fortement le colmatage sans pour autant, dans ce cas précis, le supprimer puisque la valeur maximale de perméat que l'on peut obtenir est de 7,30 l/h (exemple 1).

### Exemple 3 :

On procède exactement comme à l'exemple 1 sauf que les membranes utilisées sont du type microfiltration du type ci-dessus. Le débit de perméat de la membrane est de 13,34 l/h, la perte de charge est de 0,52 bar, le débit de base est de 104 l/h pour un débit de crête de 550 l/h.

### Exemple 4 :

On procède comme à l'exemple 2 mais avec les membranes de microfiltration de l'exemple 3. On trouve :
- Débit de perméat =: 1,96 l/h
- Perte de charge =: 0,52 bar
- - débit de base :: 104 l/h
- - débit de crête :: 550 l/h

### Exemple comparatif 4a :

On procède comme à l'exemple 4, sauf qu'on utilise des membranes neuves et qu'on enlève le disque. Les résultats obtenus sont les suivants :
- Débit stationnaire :: 206 l/h
- Perte de charge :: 0,15 bar
- Débit de perméat :: 0,67 l/h

Le débit de perméat est donc 3 fois moins élevé qu'à l'exemple 3.

Dans les exemples 1 à 4a, on a comparé, pour la microfiltration de bentonite, l'influence des régimes pseudophysiologiques sur le colmatage des membranes d'ultrafiltration et de microfiltration. Il ressort que les régimes pseudophysiologiques sont plus efficaces dans le cas des membranes de microfiltration car ces dernières se colmatent plus facilement que les membranes d'ultrafiltration lors de la séparation de la bentonite.

## Revendications

1. Procédé continu de filtration sous flux tangentiel selon lequel on fait circuler le fluide à filtrer dans une boucle (1) de circulation munie d'un module de filtration (4) comportant au moins une membrane (16) dans laquelle on établit un régime instationnaire et périodique, caractérisé en ce que la boucle (1) de circulation comporte un moyen (18) agissant sur la débit du liquide à traiter et ne provoquant pas de variations de pression autre que celles engendrées par la circulation du fluide à traiter et permettant d'engendrer, à partir d'un débit minimum de balayage Do, des débits pseudophysiologiques périodiques au moins dans la membrane, ledit moyen (18) engendrant à partir dudit débit minimum de balayage Do, au début de la période du mouvement du fluide dans la membrane, une impulsion constituée d'une phase de forte augmentation du débit, puis un plateau où l'on atteint le débit de crête Dc et une diminution jusqu'à atteindre de nouveau le débit Do, la durée de cette impulsion étant comprise entre 0,05 et 0,4 fois la période totale.

2. Procédé selon la revendication 1, caractérisé en ce que le moyen permettant d'engendrer des débits pseudophysiologiques est choisi parmi une pompe volumétrique adaptée, une pompe cardiaque et un système à disque tournant convenablement ajouré et perforé (18) situé en amont ou en aval du module de filtration (4).

3. Module de filtration comprenant une enceinte (5) munie d'au moins un canal (7) d'entrée du liquide à traiter, d'au moins un canal (9) de sortie du rétentat et d'au moins un canal (8) de sortie du perméat, un module de filtration (4) constitué d'un faisceau de membranes (16) disposées côte à côte à l'intérieur de l'enceinte (5) , lesdites membranes (16) étant supportées et montées de façon étanche dans ladite enceinte (5) de telle sorte que le fluide à traiter introduit en amont des membranes doit passer à l'intérieur de membranes et en ce que le perméat se rassemble dans ladite enceinte, et de telle sorte que le rétentat s'évacue en aval des membranes par le canal de sortie (8), ledit module (4) étant caractérisé en ce qu'il comporte en amont et'ou en aval des membranes (16) un disque tournant (18) perpendiculaire aux orifices d'entrée (20) et/ou de sortie des membranes et à une distance (d) adaptée desdits orifices, une partie (21) du disque étant ajourée de manière à ce que, lors d'une rotation du disque, la totalité des orifices (20) des membranes soit visible à travers la partie ajourée du disque, la partie non ajourée du disque comportant en outre des perforations (22), dont le nombre est au plus égal à celui des orifices (20) des membranes cachés par cette partie non ajourée et dont le diamètre est inférieur au diamètre des orifices (20).

4. Module selon la revendication 3, caractérisé en ce que la partie ajourée du disque est au moins un secteur du disque.

5. Module selon l'une des revendications 3 et 4, caractérisé en ce que le disque tournant est actionné par un moteur (M) au moyen d'un axe (19).

6. Module selon l'une des revendications 3 à 5, caractérisé en ce que le disque tournant (18) est auto-entraîné par le flux de liquide à traiter au moyen d'une turbine située en amont du disque.

7. Module selon l'une des revendications 3 à 6, caractérisé en ce que la distance (d) entre le disque et les orifices des membranes est réglable.

## Claims

1. Continuous filtration process under tangential flow according to which the fluid to be filtered is circulated in a circulation loop (1) provided with a filtration module (4) comprising at least one membrane (16) in which a non-steady and periodic state is established, characterised in that the circulation loop (1) comprises a means (18) acting on the flow rate of the liquid to be treated and not causing any variations in pressure other than those generated by the circulation of the fluid to be treated and enabling, from a minimum sweep flow rate Dₒ, periodic pseudophysiological flow rates to be generated, at least in the membrane, the said means (18) generating, from a minimum sweep flow rate Dₒ, at the beginning of the period of movement of the fluid in the membrane, a pulse consisting of a phase of a rapid increase in flow rate, then a plateau where the peak flow rate D_{c} is reached and a decrease until the flow rate Dₒ is reached again, the duration of this pulse being between 0.05 and 0.4 times the total period.

2. Process according to Claim 1, characterised in that the means enabling pseudophysiological flow rates to be generated is chosen from a suitable metering pump, a cardiac pump and a suitably open and perforated rotating-disc system (18) located upstream or downstream from the filtration module (4).

3. Filtration module comprising an enclosure (5) provided with at least one inlet channel (7) for the liquid to be treated, with at least one outlet channel (9) for the retentate and with at least one outlet channel (8) for the permeate, a filtration module (4) consisting of a bundle of membranes (16) disposed side-by-side inside the enclosure (5), the said membranes (16) being supported and mounted in a leaktight manner in the said enclosure (5) such that the fluid to be treated introduced upstream from the membranes has to pass within the membranes and in that the permeate is collected in the said enclosure, and such that the retentate is carried away downstream from the membranes by the outlet channel (8), the said module (4) being characterised in that it comprises upstream and/or downstream from the membranes (16) a rotating disc (18) perpendicular to the inlet orifices (20) and/or outlet orifices of the membranes and at a suitable distance (d) from the said orifices, a portion (21) of the disc being open in such a way that, during one rotation of the disc, the totality of the orifices (20) of the membranes is visible through the open portion of the disc, the non-open portion of the disc furthermore comprising perforations (22), the number of which is at least equal to that of the orifices (20) of the membranes concealed by this non-open portion, and the diameter of which is less than the diameter of the orifices (20).

4. Module according to Claim 3, characterised in that the open portion of the disc is at least one sector of the disc.

5. Module according to either of Claims 3 and 4, characterised in that the rotating disc is actuated by a motor (M) by means of a shaft (19).

6. Module according to one of Claims 3 to 5, characterised in that the rotating disc (18) is self-driven by the flow of liquid to be treated by means of a turbine located upstream from the disc.

7. Module according to ore of Claims 3 to 6, characterised in that the distance (d) between the disc and the orifices of the membranes is adjustable.

## Patentansprüche

1. Kontinuierliches Filtrationsverfahren unter tangentiellem Fluß, bei dem die zu filtrierende Flüssigkeit in einem Kreislauf (1) zirkuliert, der mit einer Filtrationseinheit (4) ausgestaltet ist, die mindestens eine Membran (16) enthält, in der sich ein instationärer und periodischer Betrieb ausbildet, dadurch gekennzeichnet, daß der Kreislauf (1) ein Mittel (18) aufweist, das auf den Durchsatz der zu behandelnden Flüssigkeit einwirkt und keine anderen Druckänderungen erzeugt als die von der Zirkulation der zu behandelnden Flüssigkeit erzeugten und das es gestattet, ausgehend von einem Durchsatzminimum der Spülung Do zumindest in der Membran periodische pseudophysiologische Durchsätze zu erzeugen, wobei das besagte Mittel (18) ausgehend von dem genannten minimalen Durchsatz der Spülung Do zu Beginn der Periode der Bewegung der Flüssigkeit in der Membran einen Impuls bestehend aus einer Phase starken Anstiegs des Durchsatzes, dann ein Plateau, bei dem das Maximum des Durchsatzes Dc erreicht wird, und eine Verringerung erzeugt bis wieder der Durchsatz Do erreicht ist, wobei die Dauer dieses Impulses zwischen dem 0,05 und 0,4fachen der gesamten Periode liegt.

2. Verfahren nach Anspruch 1, dadurch gekennzeichnet, daß das Mittel, das die Erzeugung pseudophysiologischer Durchsätze gestattet unter einer angepaßten Verdrängerpumpe, einer Herzpumpe und einem System mit einer drehenden Scheibe ausgewählt ist, die passend durchbrochen und perforiert (18) ist, und sich in Fließrichtung vor oder hinter der Filtrationseinheit (4) befindet.

3. Filtrationseinrichtung enthaltend eine Einfassung (5) mit mindestens einem Einlaßkanal (7) für die zu behandelnde Flüssigkeit, wenigstens einem Auslaßkanal (9) für das Retentat und mindestens einem Auslaßkanal (8) für das Permeat, einer Filtrationseinheit (4), bestehend aus einem Bündel in der Einfassung (5) nebeneinander angeordneter Membranen (16), wobei die besagten Membranen (16) so dicht in dieser Einfassung (5) gehalten und befestigt sind, daß die oberhalb der Membranen eingeführte zu behandelnde Flüssigkeit in das Innen der Membranen gelangen muß und daß sich das Permeat in der Einfassung sammelt und somit das Retentat hinter den Membranen durch den Auslaßkanal (8) ausgetragen wird, dadurch gekennzeichnet, daß diese Einrichtung (4) vor oder hinter den Membranen (16) eine drehende Scheibe (18) senkrecht zu den Einlaßöffnungen (20) und/oder den Austritten der Membranen und in einem angepaßten Abstand (d) zu den besagten Öffnungen aufweist, daß ein Teil (21) der Scheibe so durchbrochen ist, daß beim Drehen der Scheibe alle Öffnungen (20) der Membranen durch den durchbrochenen Teil der Scheibe sichtbar sind, daß der nicht durchbrochene Teil der Scheiben Perforationen (22) enthält, deren Anzahl höchstens gleich der Öffnungen (20) der Membranen ist, die vom nicht durchbrochenen Teil abgedeckt sind und deren Durchmesser kleiner ist als der Durchmesser der Öffnungen (20).

4. Einrichtung nach Anspruch 3, dadurch gekennzeichnet, daß der durchbrochene Teil der Scheibe mindestens ein Sektor der Scheibe ist.

5. Einrichtung nach einem der Ansprüche 3 oder 4, dadurch gekennzeichnet, daß die drehende Scheibe von einem Motor (M) mittels einer Achse (19) angetrieben wird.

6. Einrichtung nach einem der Ansprüche 3 bis 5, dadurch gekennzeichnet, daß die drehende Scheibe (18) durch die Strömung der zu behandelnden Flüssigkeit mittels einer vor der Scheibe angeordneten Turbine angetrieben wird.

7. Einrichtung nach einem der Ansprüche 3 bis 6, dadurch gekennzeichnet, daß der Abstand (d) zwischen der Scheibe und den Öffnungen der Membranen regelbar ist.
